# EUROPEAN PATENT SPECIFICATION

(11) **EP 1 025 788 B1**
(45) Date of publication and mention of the grant of the patent: **20.08.2003**
(21) Application number: 00200301.0
(22) Date of filing: 31.01.2000
(51) Int. Cl.: A47J 37/12

(54) **Electric deep fat fryer**
Elektrisches Fritiergerät
Friteuse électrique

(30) Priority: 02.02.1999 BE 9900069
(43) Date of publication of application: 09.08.2000
(73) Proprietor: van Ratingen, naamloze vennotschap, 3500 Hasselt (BE)
(72) Inventor: van Ratingen, Jos, 3500 Hasselt (BE)
(74) Representative: Luys, Marie-José A.H.

(56) References cited:
- FR-A- 2 668 913
- US-A- 2 448 634
- US-A- 4 468 556

## Description

This invention relates to an electric deep fat fryer comprising a container, an immersion resistor within this container and a connector box to which the immersion resistor is attached and in which this immersion resistor is connected to the power supply.

In such deep fat fryers with a cold zone, the heating resistor is situated within the container, with the heating portion at a small distance above the bottom and two upward-extending portions connected thereto, which portions penetrate with their extremity into the connector box and there are connected to the two terminals of a power supply circuit in which in most cases the thermostate and the operating elements, for example, the temperature control button, are provided.

Document US-4468556 discloses one of such fryers.

Due to the presence of the portions of the immersion resistor extending along a wall of the container in upward direction, this container wall and, in the first place, the portion of the container wall situated behind the resistor portions, is difficult to reach if the immersion resistor is not taken out. It is, for example, impossible to remove small parts of fried products with a skimmer or such from the aforementioned container wall.

This container wall and these resistor portions become spoiled, and the cleaning thereof is very time-consuming.

The invention relates to a deep fat fryer which does not show the aforementioned disadvantages and whereby the container wall, in front of which the upward-directed portions of the immersion resistor are situated, and said portions become less spoiled during use.

According to the invention, this aim is achieved in that the deep fat fryer comprises a protective wall which is attached to the connector box and extends at the interior side of the container along the upward-directed portions of the immersion resistor connected to said connector box, such that said portions are covered at least at the top, and preferably almost completely.

Due to this protective wall, practically no useful space of the container is lost, in consideration of the fact that the basket which is usually contained within the deep fat fryer, can not extend up to against said container wall as a result of the presence of the immersion resistor.

Preferably, the connector box is partially situated above the interior edge of the container, such that the upward-extending portions of the immersion resistor penetrate through the underside into the overhanging portion of the connector box.

The protective wall is, for example, a plate. It can be prolonged by a portion which extends up to on the top of the housing.

Preferably, the protective wall extends over almost the entire width of the container wall, in front of which the upward-extending portions of the immersion resistor are situated.

At the upper edge of the container, the protective wall can be provided with a hook or such at which a possible basket can be suspended. It may also be provided with one or more level indications, for example, a minimum and maximum level indication, with possibly the pertaining indications MIN and MAX.

Such level indications are easier to provide on the protective wall than on the container. As they are situated in the rear portion of the container, they are easier and better visible for the user in order to monitor the level of the frying oil of frying fat in the container than in the case that they are provided at the front wall or the side wall of the container. In existing deep fat fryers without protective wall, it was difficult to provide such indications at the back wall of the container, due to the presence of the immersion resistor.

This protective wall preferably is made of metal, in particular stainless steel.

The deep fat fryer may comprise a cover with a filter which is hingeably attached to the connector box.

Such cover must be able to fit closely against the container in order to prevent leakages of unfiltered vapours from the container to the exterior.

It was observed that the above-described forms of embodiment allow to obtain a good sealing of the closed cover in a relatively inexpensive manner.

If the connector box is situated at the exterior side of the container, the immersion resistor has to come around the upper edge of the container in order to get into the container. Sealing the cover at this edge around the immersion resistor is rather difficult. Therefore, it is known to provide a slot in the edge of the container, through which slot the immersion resistor is extending, whereby a sealing element hermetically closes off the slot around the immersion resistor. Providing a slot in a metal container increases the production cost of the container.

According to the invention, in the form of embodiment whereby the connector box is provided on top of the container such that it is situated with a portion above the interior edge of the container, a good sealing of the cover can be obtained by moreover adapting the form of the edge of the cover, which edge, in closed position, is situated opposite to the connector box, to the corresponding opposite edge of the connector box, which latter edge either or not is covered by the prolongation of the protective wall.

The cover can be removable from the connector box, and to this aim, this latter may be provided with two openings which are open towards the top, such as, for example, slots, into which hinge plates of the cover are removably inserted.

With the intention of better showing the characteristics of the invention, hereafter, as an example without any limitative character, several preferred forms of embodiment of a deep fat fryer according to the invention are described, with reference to the accompanying drawings, wherein:
figure 1 represents a view in perspective of a deep fat fryer according to the invention;
figure 2 represents a cross-section according to line II-II in figure 1;
figure 3 represents a view in perspective analogous to that of figure 1, but in respect to another form of embodiment of the deep fat fryer.

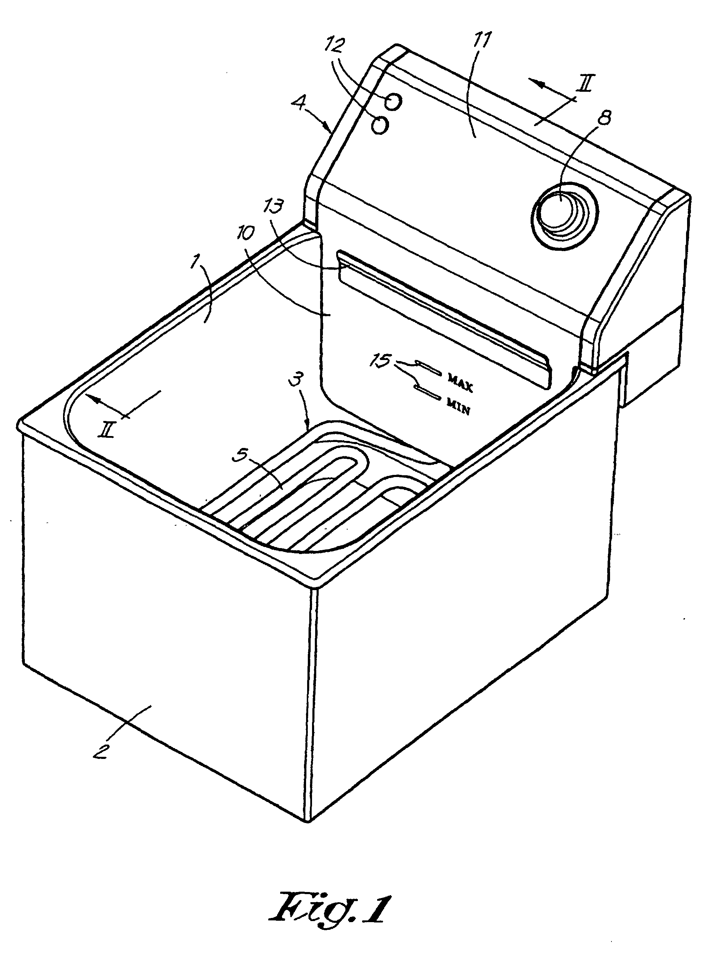

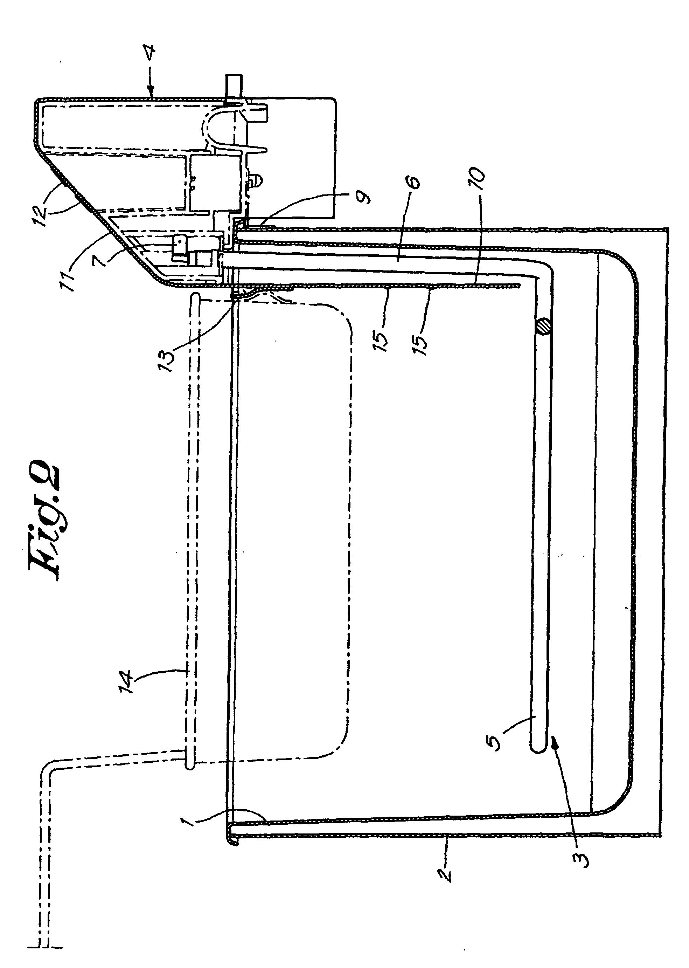

The deep fat fryer represented in figures 1 and 2 substantially consists of an almost rectangular container made of stainless steel which, with its outward-bent edges, rests upon a casing 2 which also is made of stainless steel, an electric immersion resistor 3 and a connector box 4 which is provided at the container 1 and also forms the operating unit.

The immersion resistor 3 consists of a heating bottom portion 5 and of two upward-directed portions 6, whereby the lowermost ends thereof are connected to the bottom portion and the uppermost ends thereof penetrate into the connector box 4. These ends are fixed at the connector box 4, and the opening through which they penetrate into the portion of the connector box 4 hanging over the container 1, is sealed hermetically around the portions 6.

In this connector box 4, the uppermost ends of the portions 6 are provided with electrical contacts 7, to which the ends of a power supply circuit are connected, which circuit, for simplicity's sake, is not represented in the figures. In this circuit, a thermostate and a temperature regulator, which can be set by means of an operating button 8, are mounted.

This connector box 4 bridges the edge of the container 1, and the underside of the portion situated at the exterior side of the container 1 is suspended in a removable manner at a leg of a hook 9 which is welded to the upper side of the housing 2, or is slid by means of a pushing movement into a sled which is attached to the housing 2.

At the interior side of the container 1, the portions 6 of the immersion resistor 3 are practically completely covered by a protective wall 10 which, in the represented example, has the form of a plate which, at its lower end, extends up to a small distance to the bottom portion 5 of the immersion resistor 3 and, at the top, is prolonged with a plate portion 11 and runs through over the operating unit 4, even up to the rear wall thereof.

The width of the protective wall 10 inside the container 1 is equal to the width of the container 1, such that above the bottom portion 5 the entire container wall, in front of which the portions 6 of the immersion resistor 3 are situated, is covered. Above the container 1, the width of the plate portion 11 is somewhat larger, such that the upper side of the operating unit 4 is completely covered by this plate portion 11, with the exeption of a small edge at both extremities.

The operating button 8 is situated above this plate portion 11, and two windows 12 are provided in this plate portion 11, opposite to lights which are switched into the power supply circuit.

At its side which is directed towards the interior side of the container 1, the protective wall 10 at the top comprises a hook 13 for suspending the basket 14 of the deep fat fryer above the frying oil, for example, for letting the fried products drop off. This basket 14 is only represented in figure 2 and in dash-dot line.

The protective wall 10 does not reduce the useful space of the container 1, in consideration of the fact that the basket 14, due to the portions 6 of the immersion resistor 3, can not be larger than represented.

As the hook 13 for this basket 14 is provided at the protective wall 10 instead of the wall of the container, the construction of this container 1 is simplified.

Beneath the hook 13, the protective wall 10 is provided with two level indications 15 consisting of stripes. Next to the lowermost stripe, MIN is indicated, and next to the uppermost stripe, MAX. These stripes and letters can be formed by stamped portions in the protective cover 10, such that they form a protruding relief towards the interior of the container 1.

The protective wall 10 prevents dirt from adhering to the wall behind the portions 6 and to these portions 6, and remainders of fried products or crumbs or such from accumulating between or behind the portions 6, where they are difficult to remove.

The container 1 and the immersion resistor therefore can be kept clean for a longer period of time and are easier to clean.

Moreover, the portions 6 are kept out of view, which enhances the appearance of the deep fat fryer.

The protective wall 10, together with the connector box 4 and the immersion resistor 3, is removed from the container 1 when this container 1 1 has to be cleaned and/or the frying oil has to be exchanged.

The protective wall 10 does not necessarily have to be prolonged by a plate portion 11. It can be fixed with its upper side to the underside of the portion of the connector box 4 which is situated above the interior side of the container 1.

As the dirt, in the first place, accumulates at the height of the level of the frying fat or the frying oil and higher, the protective wall 10 not necessarily has to extend up to the bottom portion 5 of the immersion resistor 3, and it may suffice that it extends up to under the lowest fat or oil level. Also for esthetic reasons, it is, however, recommended that this protective wall 10 extends as low as possible.

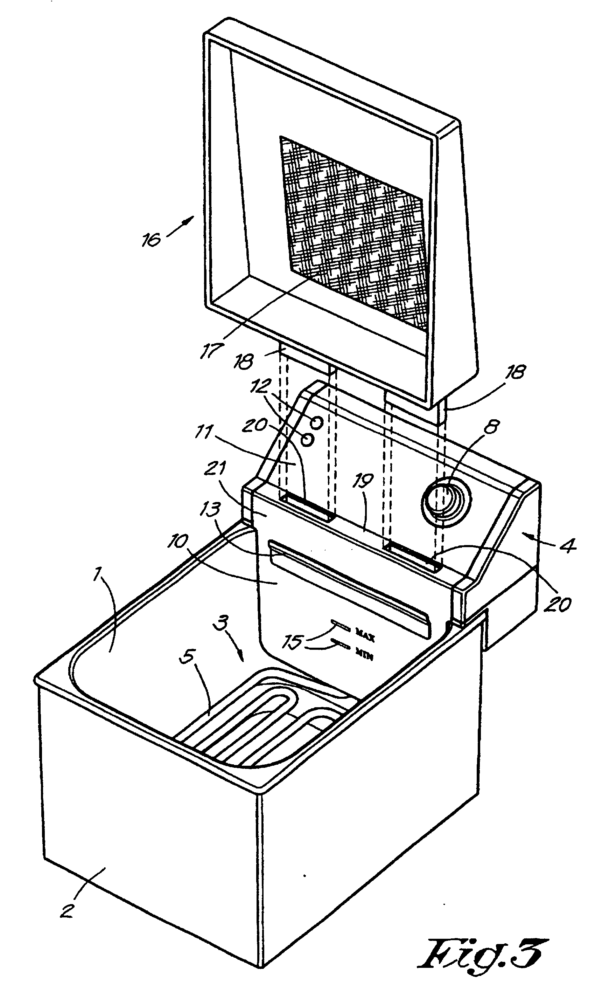

The form of embodiment represented in figure 3 differs from the form of embodiment described in the aforegoing in that the deep fat fryer comprises a cover 16 with a filter 17 which is fixed at the connector box 4 in a hinged manner, but also in a removable manner.

To this aim, this cover 16 comprises two hinge plates 18 which extend over the rearmost edge and are connected to the rest of the cover 16 in a springy manner.

At the top and at the side of the container 1, the connector box has an upward-directed flat portion 19, into which two slots 20 for the aforementioned hinge plates 18 give out.

The rearmost edge of the cover 16 and the edge 21 of the connector box 4, which latter edge is situated beneath this portion 19, match in their form and, in the given example, are flat.

The hinge plates 18 which, when the cover 16 is removed from the container 1, as represented in figure 3, by means of built-in springs are in the position in which they extend in the prolongation of the cover 16, are provided, with the cover 16 in vertical position, in the slots 20, after which the cover 16 can be tilted down.

In closed position, this cover 16 fits precisely against the outward-bent edges of the container 1, except at the side of the connector box 4, where the edge of the cover 16 fits precisely against the edge *of* this connector box 4.

If this connector box 4, as represented in figure 3, is covered with the plate portion 11 adjoining the protective wall 10, then the cover fits against this plate portion 11.

In a variant, the protective wall 10 is not prolonged by means of a plate portion 11, whereby then the cover 16 in closed position adjoins the uncovered side of the connector box 4.

Possibly, the cover 16 may also adjoin the flat portion 19.

The protective wall 10 does not necessarily have to be flat and does not necessarily have to extend over the entire width of the container 1. It can, for example, adjoin the container wall with bent portions at opposite sides of the portions 6.

The invention is in no way limited to the forms of embodiment described heretofore, on the contrary may such deep fat fryer be realized in various variants while still remaining within the scope of the invention.

## Claims

1. Electric deep fat fryer comprising a container (1), an immersion resistor (3) in this container (1), and a connector box (4) to which the immersion resistor (3) is attached and in which this immersion resistor (3) is connected to the power supply, **characterized in that** it comprises a protective wall (10) which is fixed at the connector box (4) and which extends at the interior side of the container (1) along the upward-directed portions (6) of the immersion resistor (3) connected to said connector box (4), such that these portions (6) are covered at least at the top.

2. Deep fat fryer according to claim 1, **characterized in that** the protective wall (10) extends up to almost against the bottom portion (5) of the immersion resistor (3) extending above the bottom of the container (1), and that therefore the aforementioned portions (6) of said immersion resistor (3) are covered almost completely by the protective wall (10).

3. Deep fat fryer according to claim 1 or 2, **characterized in that** the connector box (4) partially is situated above the interior side of the container (1), such that the upward-extending portions (6) of the immersion resistor (3) penetrate at the underside into the overhanging portion of the connector box (4).

4. Deep fat fryer according to any of the preceding claims, **characterized in that** the protective wall (10) is a plate.

5. Deep fat fryer according to any of the preceding claims, **characterized in that** the protective wall (10) is prolonged by a portion (11) which extends up to on top of the housing (2).

6. Deep fat fryer according to claims 4 and 5, **characterized in that** the protective wall (10) with a plate portion (11) smoothly continues up to over the connector box (4).

7. Deep fat fryer according to any of the preceding claims, **characterized in that** the protective wall (10) extends over almost the entire width of the container wall, in front of which the upward-extending portions (6) of the immersion resistor (3) are situated.

8. Deep fat fryer according to any of the preceding claims, **characterized in that** the protective wall (10) is provided with a hook (13) or such at the upper edge of the container (1), at which hook or such a possible basket (14) may be suspended.

9. Deep fat fryer according to any of the preceding claims, **characterized in that** the protective wall (10) is provided with at least one level indication (15), preferably a minimum and a maximum level indication (15).

10. Deep fat fryer according to any of the preceding claims, **characterized in that** the protective wall (10) is made of metal, in particular of stainless steel.

11. Deep fat fryer according to claim 3, **characterized in that** it comprises a cover (16) with a filter (17) which is fixed at the connector box (4) in a hinged manner and that the form of the edge of the cover (16), which in closed position is situated opposite to the connector box (4), is adapted to the corresponding opposite edge (21) of the connector box (4), which edge either or not is covered by a prolongation of the protective wall (10).

12. Deep fat fryer according to claim 11, **characterized in that** the cover (16) can be removed from the connector box (4) and that this latter to this aim is provided with two openings (20), for example, slots, which are open towards the top and in which hinge plates (18) of the cover (16) are inserted in a removable manner.

## Patentansprüche

1. Elektrisches Frittiergerät, umfassend einen Behälter (1), einen Tauchwiderstand (3) in diesem Behälter (1) und einen Anschlußkasten (4), an dem der Tauchwiderstand (3) angebracht ist und in dem dieser Tauchwiderstand (3) an die Stromversorgung angeschlossen ist, **dadurch gekennzeichnet, daß** es eine Schutzwand (10) umfaßt, die an dem Anschlußkasten (4) befestigt ist und sich an der Innenseite des Behälters (1) entlang der nach oben gerichteten Abschnitte (6) des Tauchwiderstands (3) erstreckt, der an den Anschlußkasten (4) angeschlossen ist, so daß diese Abschnitte (6) zumindest oben abgedeckt sind.

2. Frittiergerät nach Anspruch 1, **dadurch gekennzeichnet, daß** sich die Schutzwand (10) bis nahezu gegen den unteren Abschnitt (5) des Tauchwiderstands (3) erstreckt, der sich über dem Boden des Behälters (1) erstreckt, und daß daher die oben genannten Abschnitte (6) des Tauchwiderstands (3) nahezu vollständig durch die Schutzwand (10) abgedeckt sind.

3. Frittiergerät nach einem der Ansprüche 1 oder 2, **dadurch gekennzeichnet, daß** der Anschlußkasten (4) teilweise über der Innenseite des Behälters (1) angeordnet ist, so daß die sich nach oben erstreckenden Abschnitte (6) des Tauchwiderstands (3) auf der Unterseite in den vorstehenden Abschnitt des Anschlußkastens (4) eindringen.

4. Frittiergerät nach einem der vorhergehenden Ansprüche, **dadurch gekennzeichnet, daß** die Schutzwand (10) eine Platte ist.

5. Frittiergerät nach einem der vorhergehenden Ansprüche, **dadurch gekennzeichnet, daß** die Schutzwand (10) durch einen Abschnitt (11) verlängert ist, der sich bis zur Oberseite des Gehäuses (2) erstreckt.

6. Frittiergerät nach einem der Ansprüche 4 oder 5, **dadurch gekennzeichnet, daß** sich die Schutzwand (10) mit einem Plattenabschnitt (11) glatt bis über den Anschlußkasten (4) fortsetzt.

7. Frittiergerät nach einem der vorhergehenden Ansprüche, **dadurch gekennzeichnet, daß** sich die Schutzwand (10) über nahezu die gesamte Breite der Behälterwand erstreckt, vor der die sich nach oben erstreckenden Abschnitte (6) des Tauchwiderstands (3) angeordnet sind.

8. Frittiergerät nach einem der vorhergehenden Ansprüche, **dadurch gekennzeichnet, daß** die Schutzwand (10) an der Oberkante des Behälters (1) mit einem Haken (13) oder dergleichen versehen ist, an dem ein möglicher Korb (14) aufgehängt sein kann.

9. Frittiergerät nach einem der vorhergehenden Ansprüche, **dadurch gekennzeichnet, daß** die Schutzwand (10) mit zumindest einer Pegelanzeige (15), vorzugsweise mit einer Mindest- und einer Höchstpegelanzeige (15) versehen ist.

10. Frittiergerät nach einem der vorhergehenden Ansprüche, **dadurch gekennzeichnet, daß** die Schutzwand (10) aus Metall, insbesondere aus rostfreiem Stahl hergestellt ist.

11. Frittiergerät nach Anspruch 3, **dadurch gekennzeichnet, daß** es eine Abdeckung (16) mit einem Filter (17) umfaßt, die auf eine klappbare Weise am Anschlußkasten (4) befestigt ist, und daß die Ausbildung der Kante der Abdeckung (16), die in geschlossener Position gegenüber des Anschlußkastens (4) angeordnet ist, an die entsprechende gegenüberliegende Kante (21) des Anschlußkastens (4) angepaßt ist, welche entweder durch eine Verlängerung der Schutzwand (10) abgedeckt ist oder nicht.

12. Frittiergerät nach Anspruch 11, **dadurch gekennzeichnet, daß** die Abdeckung (16) vom Anschlußkasten (4) abgenommen sein kann, und daß letzterer zu diesem Zweck mit zwei Öffnungen (20), z.B. Schlitzen, versehen ist, die zur Oberseite offen sind und in die Scharnierplatten (18) der Abdeckung (16) auf eine abnehmbare Weise eingesetzt sind.

## Revendications

1. Friteuse électrique comprenant un contenant (1), une résistance à immersion (3) dans ce contenant (1), et un boîtier de connexion (4) auquel est fixée la résistance à immersion (3) et dans lequel cette résistance à immersion (3) est connectée à la source de puissance, **caractérisée en ce qu'**elle comprend une paroi de protection (10) fixée au boîtier de connexion (4) et s'étendant du côté intérieur du contenant (1) le long des parties dirigées vers le haut (6) de la résistance à immersion (3) connectée audit boîtier de connexion, de sorte que ces parties (6) soient recouvertes au moins à leur sommet.

2. Friteuse électrique selon la revendication 1, **caractérisée en ce que** la paroi de protection (10) s'étend sensiblement jusqu'à la partie de base (5) de la résistance à immersion (3) s'étendant au-dessus du fond du contenant (1) de sorte que les parties susmentionnées (6) de ladite résistance à immersion (3) soient recouvertes sensiblement complètement par la paroi de protection (10).

3. Friteuse électrique selon la revendication 1 ou 2, **caractérisée en ce que** le boîtier de connexion (4) est partiellement disposée au-dessus du côté intérieur du contenant (1), de sorte que les parties s'étendant vers le haut (6) de la résistance à immersion (3) pénètrent dans la partie débordante du boîtier de connexion (4) par son côté inférieur.

4. Friteuse selon l'une quelconque des revendications précédentes, **caractérisée en ce que** la paroi de protection (10) est une plaque.

5. Friteuse selon l'une quelconque des revendications précédentes, **caractérisée en ce que** la paroi de protection (10) est prolongée par une partie (11) s'étendant jusqu'au sommet du boîtier (2).

6. Friteuse selon l'une des revendications 4 et 5, **caractérisée en ce que** la paroi de protection (10) se prolonge de manière continue jusqu'au dessus du boîtier de connexion (4) par une partie plate (11).

7. Friteuse selon l'une quelconque des revendications précédentes, **caractérisée en ce que** la paroi de protection (10) s'étend sur sensiblement toute la largeur de la paroi du contenant, devant laquelle les parties s'étendant vers le haut (6) de la résistance à immersion (3) sont disposées.

8. Friteuse selon l'une quelconque des revendications précédentes, **caractérisée en ce que** la paroi de protection (10) est munie d'un crochet (13) ou équivalent, au bord supérieur du contenant (1), auquel crochet ou équivalent un éventuel panier peut être suspendu.

9. Friteuse selon l'une quelconque des revendications précédentes, **caractérisée en ce que** la paroi de protection (10) est munie d'au moins une indication de niveau (15), de préférence une indication de niveau minimum et maximum (15).

10. friteuse selon l'une quelconque des revendications précédentes, **caractérisée en ce que** la paroi de protection (10) est constituée de métal, en particulier d'acier inoxydable.

11. Friteuse selon la revendication 3, **caractérisée en ce qu'**elle comprend un couvercle (16) ayant un filtre (17) fixé au boîtier de connexion (4) par une charnière et **en ce que** la forme du bord du couvercle (16) qui en position fermée est disposé à l'opposé du boîtier de connexion (4) est adaptée au bord opposé correspondant (21) du boîtier de connexion (4), lequel bord est ou n'est pas recouvert par un prolongement de la paroi de protection (10).

12. Friteuse selon la revendication 11, **caractérisée en ce que** le couvercle (16) peut être retiré du boîtier de connexion (4) et **en ce que** ce dernier est pourvu à cette fin de deux ouvertures (20), par exemple des fentes, ouvertes vers le haut et dans lesquelles des plaques de charnière (18) du couvercle (16) sont insérées de manière amovible.
